# FASCICULE DE BREVET EUROPEEN

(11) **EP 1 878 635 B1**
(45) Date de publication et mention de la délivrance du brevet: **07.01.2009**
(21) Numéro de dépôt: 07112276.6
(22) Date de dépôt: 11.07.2007
(51) Int. Cl.: B62B 7/12, B62B 7/02

(54) **Poussette pour enfant à plusieurs positions d'utilisation.**
Kinderwagen mit mehreren Verwendungsstellungen
Children stroller with several use positions

(30) Priorité: 11.07.2006 FR 0606320
(43) Date de publication de la demande: 16.01.2008
(73) Titulaire: DOREL FRANCE SA, 49309 Cholet Cedex (FR)
(72) Inventeur: Ageneau, Laurent, 85290 Saint Laurent sur Sèvres (FR)
(74) Mandataire: Bioret, Ludovic

(56) Documents cités:
- WO-A-00/06437
- WO-A-03/035448
- DE-A1- 10 306 778
- FR-A1- 2 718 407
- GB-A- 2 314 052
- GB-A- 2 413 534
- US-A- 5 511 802
- US-B1- 6 196 572

## Description

### 1. Domaine de l'invention

Le domaine de l'invention est celui de la puériculture. Plus précisément, l'invention concerne les voitures d'enfant, ou poussette. Certaines poussettes, dites par la suite convertibles, sont conçues pour pouvoir être utilisées dans plusieurs configurations.

La présente invention concerne particulièrement de telles poussettes convertibles.

### 2. Solutions de l'art antérieur

De nombreux modèles de poussettes sont conçus pour pouvoir être utilisés dans différentes configurations. On connaît par exemple des poussettes comprenant une structure sur laquelle peut se monter, au choix, un hamac, une coque, ou une nacelle. Il est également courant que le hamac de telles poussettes puisse être monté soit face à l'adulte qui pousse la poussette, soit dos à cet adulte (face à la route).

Le document US-6 513 827 divulgue une poussette qui peut s'utiliser dans une configuration à quatre roues ou dans une configuration à deux roues. Ces configurations permettent de s'adapter à des terrains de natures différentes. Elle permet également d'utiliser la poussette dans une configuration où elle est poussée par l'utilisateur (configuration classique) ou dans une position où elle est tirée (configuration « tirette », par opposition à « poussette »).

Dans sa configuration à quatre roues, la poussette comporte deux roues principales (roues arrière) et deux roues secondaires (roues avant). Le siège dans lequel se trouve l'enfant se trouve sensiblement à la verticale du centre du quadrilatère formé par les quatre roues. Dans sa configuration à deux roues, les bras support des deux roues secondaires sont ramenés dans un plan parallèle aux bras support des deux roues principales.

Les bras support des roues secondaires étant moins longs que les bras support des roues principales, les roues secondaires ne sont plus, dans la configuration à deux roues, en contact avec le sol. Les bras support des poignées, ou du guidon, de la poussette se trouvent alors dans le prolongement des bras support des roues principales.

Le siège dans lequel se trouve l'enfant se trouve sensiblement au centre d'un quadrilatère formé par les deux roues principales et les deux poignées de la poussette. Le changement de configuration de cette poussette se fait par la rotation des bras support des roues et des poignées, ou du guidon, autour d'une pièce centrale d'articulation.

Le document GB 2314052 A présente une poussette selon le préambule de la revendication 1 dont les roues arrière peuvent se déplacer par pivotement jusqu'à être coaxiales avec les roues avant. La poussette peut être utilisée pour porter un bébé avec les roues secondaires en place ou pliées.

Le document WO 03/035448 A concerne une poussette (ou un chariot) selon le préambule de la revendication 1 composé d'un montant central à l'extrémité inférieure duquel est fixé un plateau portant deux petites roues. Un support de grandes roues est monté pivotant sur le montant central de façon à pouvoir prendre deux positions: l'une stable (à 4 roues) et l'autre instable (à 2 roues).

Le document DE 10306778 A1 concerne un chariot pour enfant pouvant être utilisé dans deux positions, comme poussette ou comme une remorque.

Le document US 5511 802 A présente une poussette comportant une roue unique à l'avant et un harnais pour l'adulte poussant, lui permettant de porter l'arrière de la poussette sans occuper ses mains.

Le document FR 2718407 A concerne une poussette tout-terrain, qui peut être utilisée en mode «3 roues» ou en mode «brouette », en repliant les deux roues arrière. Les roues arrières sont par conséquent pliables, mais elle ne sont pas déplaçables entre plusieurs positions d'utilisation.

Le document US 6 196 572 B1 présente une poussette à trois roue dont la roue avant est amovible de façon à transformer la poussette en une remorque. Dans cette position de remorque, le guidon est pivoté vers l'avant de la poussette.

Le document GB 2413534 A présente une poussette comportant deux roues principales à l'avant et une roue secondaire à l'arrière qui peut être escamotée par pivotement. Dans aucune des positions prévues, cependant, les roues ne sont situées sous le centre de gravité de la poussette.

De telles poussettes comportent plusieurs inconvénients, qui ont pour conséquence qu'elles présentent des problèmes de praticité, d'ergonomie, de sécurité et de complexité de fabrication.

Un premier inconvénient est ainsi que l'utilisateur qui pousse, ou qui tire, une telle poussette dans sa configuration à deux roues doit supporter un poids important. Le poids de l'enfant et de la poussette est en effet essentiellement reporté au niveau des poignées ou du guidon de la poussette. Cela entraîne donc une fatigue importante du porteur, en particulier au niveau de ses bras, surtout quand la poussette est utilisée dans cette configuration sur de grandes distances.

Un autre des inconvénients de ces poussettes est la complexité de leur mécanisme de changement de configuration. En effet, ce mécanisme doit permettre la rotation et le verrouillage de plusieurs éléments. Son utilisation est donc relativement peu aisée, et sa fabrication est complexe. La fabrication d'une telle pièce coûte donc cher. En outre, du fait de la multiplicité des mouvements nécessaires, les utilisateurs n'utilisent pas, ou peu, la possibilité de changement de configurations.

Encore un autre inconvénient de cet art antérieur est que la personne la poussant ou la tirant, ou l'utilisateur, ne peut pas lâcher le guidon ou les poignées de la poussette, quand celle-ci est en configuration à deux roues. En effet, la poussette n'est pas stable, et ne peut pas tenir par elle-même. L'utilisateur doit alors, s'il veut lâcher le guidon ou les poignées, soit poser les poignées de la poussette par terre, ce qui l'oblige à se baisser et est inconfortable pour l'enfant qui est transporté, soit remettre la poussette dans une position à quatre roues, pour qu'elle soit stable par elle-même.

### 3. Objectifs de l'invention

L'invention a notamment pour objectif de pallier ces inconvénients de l'art antérieur.

Plus précisément, un objectif de l'invention est de fournir une poussette qui puisse passer simplement et facilement d'une configuration classique à trois ou quatre roues à une configuration tirette à deux roues en contact avec le sol.

Un autre objectif de l'invention est de fournir une telle poussette dont l'utilisation dans sa configuration tirette soit particulièrement facile et confortable pour l'utilisateur, et entraîne pour lui le moins possible de fatigue.

Un autre objectif de l'invention est de fournir une telle poussette qui offre une bonne sécurité, et qui, en particulier, minimise le risque de basculement de la poussette, dans sa configuration tirette.

De façon particulière, un objectif de l'invention est de fournir une telle poussette qui, dans sa configuration tirette, puisse être lâchée par l'utilisateur sans risque pour l'enfant transporté, et en particulier sans risque de basculement de la poussette, de manière particulièrement facile.

Encore un autre objectif de l'invention est de fournir une telle poussette qui offre un bon niveau de confort pour l'enfant transporté, tant dans la configuration tirette que dans la configuration à trois ou quatre roues de la poussette.

L'invention a également pour objectif de fournir une telle poussette qui puisse passer d'une configuration à l'autre sans qu'il soit nécessaire d'enlever l'enfant de l'assise, et sans entraîner d'inconfort ou de risque pour l'enfant.

Un autre objectif de l'invention est de fournir une telle poussette qui puisse se plier facilement et efficacement.

Un objectif de l'invention est de fournir une telle poussette qui soit facile à fabriquer, et de coût réduit.

### 4. Exposé de l'invention

Ces objectifs, ainsi que d'autres qui apparaîtront par la suite, sont atteints à l'aide d'une poussette pour enfant selon le préambule de la revendication 1 et telle que dans la première position d'utilisation, les longerons ne sont pas verrouillés,et que, en l'absence d'action d'un utilisateur, la poussette tend à revenir dans la deuxième position.

La poussette peut ainsi prendre une configuration « tirette » dans laquelle son poids est très bien réparti, ce qui fait que son utilisation est confortable pour l'utilisateur qui se fatigue peu en la tirant.

Selon un mode de réalisation avantageux de l'invention, le passage de la première position d'utilisation à la seconde position d'utilisation se fait par rotation de deux longerons portant chacun une des roues principales, par rapport à un élément fixe du châssis.

Ce changement de configuration de la poussette peut ainsi se faire de façon très facile.

On obtient ainsi une très grande sécurité pour l'enfant transporté dans la poussette. En effet, si l'utilisateur lâche les poignées ou le guidon quand la poussette est en configuration instable à deux roue, la poussette revient automatiquement dans sa position stable. Il n'y a donc pas de risque de basculement de la poussette.

Préférentiellement, dans la seconde position d'utilisation, au moins une roue secondaire est fixée au châssis, le plan de référence étant situé entre l'axe de rotation des roues principales et l'axe de rotation de la ou des roues secondaires.

La poussette peut ainsi etre utilisée dans une configuration à trois ou quatre roues.

Selon un mode de réalisation avantageux, la ou les roues secondaires sont amovibles et/ou mobiles par rapport au châssis.

Préférentiellement, dans la première position d'utilisation, une béquille forme point d'appui permettant de maintenir la poussette en équilibre.

Avantageusement, la béquille est repliable.

Il est ainsi facile de configurer la poussette en fonction du besoin.

Selon un mode de réalisation préférentiel, une commande située à proximité d'un guidon ou de poignées de la poussette permet de freiner les roues principales.

Avantageusement, une commande située à proximité d'un guidon ou de poignées de la poussette permet de déverrouiller la position du longeron quand la poussette est dans la seconde position.

L'utilisateur peut ainsi , en gardant ses mains au niveau des poignées ou du guidon de la poussette, passer facilement de la configuration poussette à la position tirette.

Selon un mode de réalisation avantageux de l'invention, le châssis porte deux éléments de guidage contrôlant respectivement la position de chacun des axes de rotation des roues principales.

Selon une solution avantageuse, chacun des éléments de guidage portent une lumière dans laquelle circule un doigt solidaire d'un support de l'axe de rotation de l'une des roues principales.

Préférentiellement, la lumière définit un arc de cercle.

Le changement de configuration de la poussette peut ainsi être réalisé de façon fiable et efficace.

De façon avantageuse, les éléments de guidage portent des moyens de suspension qui, préférentiellement, comprennent au moins un élément souple monté à au moins une des extrémités de la lumière et/ou sur le doigt.

On obtient ainsi très facilement un système de suspension efficace dans les différents configurations de la poussette.

Selon un mode de réalisation préférentiel, la poussette comporte un guidon ou des poignées pouvant être orienté selon au moins deux configurations pour s'adapter à la position d'utilisation de la poussette.

L'utilisateur peut ainsi tenir le guidon ou les poignées à une hauteur confortable et pratique, quelle que soit la position d'utilisation.

Selon un mode de réalisation avantageux de l'invention, l'orientation de l'assise reste sensiblement constante lors du passage entre la première position et la seconde position.Ce changement de configuration, ainsi bien entendu que le passage de la deuxième à la première position, peut ainsi être fait sans enlever l'enfant de l'assise, et sans entraîner d'inconfort pour l'enfant.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente en perspective un mode de réalisation d'une poussette de l'invention, dans une configuration classique à trois roues ;
- la figure 2 représente la poussette de la figure 1 dans une configuration tirette à deux roues ;
- la figure 3 est une vue de détail de la poussette de la figure 1, dans une configuration classique à trois roues, représentant un élément de pivotement ;
- la figure 4 représente la poussette de la figure 1 pliée ;
- la figure 5 est une vue de détail de la poussette de la figure 1, dans une variante de la configuration tirette, à trois roues ;
- la figure 6 est une vue de détail de la poussette de la figure 1, représentant une poignée de la poussette.

### 6. Description détaillée de l'invention

### 6.1 Rappel du principe de l'invention

Le principe général de l'invention repose sur la mobilité des roues principales de la poussette, qui peuvent se déplacer entre une position dans laquelle elle sont éloignées du centre de gravité de la poussette, quand celle-ci est utilisée dans une configuration classique, avec trois ou quatre roues, et une position dans laquelle elles sont situées sensiblement sous le centre de gravité de la poussette, quand celle-ci est utilisée dans une configuration tirette, roulant sur deux roues.

### 6.2 La poussette dans sa configuration classique à 3 roues

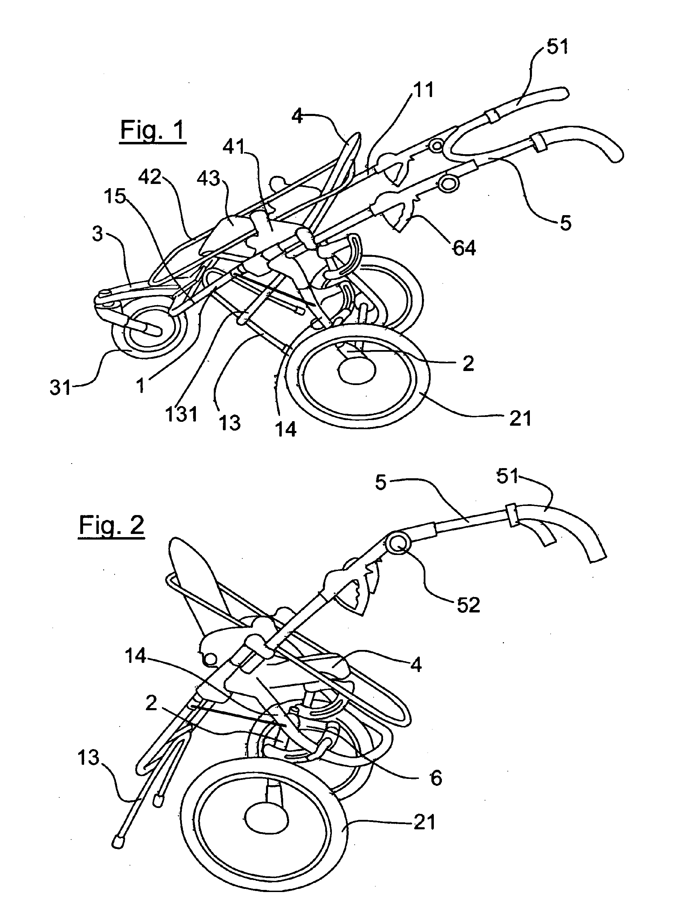

La figure 1 représente une poussette selon un mode de réalisation de l'invention, dans une configuration classique à trois roues. Il est clair que, sans modifier l'invention, la poussette peut également avoir quatre roues.

La base de cette poussette est formée d'un châssis 1, qui est par exemple constitué d'éléments tubulaires. Ce châssis 1 comporte une partie basse 15, deux bras poussoirs 11, situés dans le prolongement de la partie basse 15, et un support de roue principale (roue arrière) 14, qui s'étend sensiblement perpendiculairement à la partie basse et aux bras poussoirs.

Le support de roue principale 14 est prolongé par deux longerons de roues principales 2, qui portent les roues principales 21. Les bras poussoirs 11 sont prolongés par un support de poignées 5, qui porte deux poignées 51.

A l'extrémité avant de la poussette, un support de roue secondaire 3 est fixé à la partie basse 15 du cadre 1. Une roue secondaire (roue avant) 31 est montée pivotante sur ce support de roue secondaire 3.

Un hamac 4 est également fixé au cadre 1. Ce hamac comporte, classiquement, deux pièces d'accrochage 41, une armature 42 et un siège 43. Ce hamac est, de façon classique, amovible. Il peut être, par exemple, remplacé par une coque ou une nacelle. Il peut, au choix, être monté sur le cadre 1 de la poussette soit face à l'utilisateur qui pousse la poussette, soit dos à cet utilisateur, comme illustré sur la figure 1.

### 6.3 La poussette dans sa configuration tirette à 2 roues

La figure 2 représente la poussette de la figure 1 dans une configuration tirette à deux roues. Pour passer de la configuration classique à trois roues à la configuration tirette à deux roues, plusieurs opérations ont été effectuées.

Les longerons de roues principales 2 ont été déplacés par rapport au support de roue principale 14, de façon que les roues principales 21 soient placées sensiblement en dessous du hamac 4. Ce déplacement se fait par l'intermédiaire des pièces de guidage 6, qui forment par exemple une articulation entre le support de roue principale 14 et les longerons de roues principales 2, permettant un pivotement sur une plage angulaire prédéterminée. Le déplacement peut également comprendre une translation, ou plus généralement suivre toute courbe adaptée.

Le hamac est représenté sur la figure 2 monté sur le cadre 1 face à l'utilisateur, c'est-à-dire dans le sens opposé à celui représenté à la figure 1. Bien entendu, il peut également être monté dos à l'utilisateur. Des moyens classiques, tels que ceux utilisés par la Déposante et connus sous la marque déposée « Moduloclip » peuvent être utilisés pour solidariser le hamac, ou tout autre élément, au châssis.

Le support de roue secondaire 3 a été détaché du cadre 1 de la poussette, de façon à ce que la poussette ne comporte plus que deux roues. Dans un autre mode de réalisation, cette roue secondaire peut être repliée, par exemple par pivotement autour d'un axe soit vers le haut, soit sous le hamac. Dans encore un autre mode de réalisation, la ou les roues avant peuvent rester en place, mais ne pas être en contact avec le sol lors du déplacement. Dans une autre variante, le support de roue peut servir de béquille pour maintenir la poussette.

Dans le mode de réalisation réprésenté par la figure 2, une béquille 13 est fixée au châssis 1 de la poussette, et est articulée par rapport à ce châssis. Sur la figure 1, on peut voir que la béquille 13, dans la configuration à trois roues de la poussette, est maintenue par une sangle 131. Au contraire, sur la figure 2, on peut voir que la béquille 13, dans la configuration à deux roues de la poussette, est placée dans le prolongement du châssis 1.

Le passage à une configuration à deux roues n'est pas indispensable pour utiliser la poussette en configuration tirette. En effet, la poussette peut parfaitement être en configuration tirette avec trois ou quatre roues. Cependant, en configuration tirette, seules deux des roues sont en contact avec le sol.

Pour passer facilement de la configuration classique à la configuration tirette, l'utilisateur n'a qu'à déverrouiller la position du longeron de roue principale 2, à actionner le frein de ces roues principales, et à tirer sur les poignées de la poussette. Celle-ci passe ainsi en position tirette de façon très facile.

Ce passage d'une configuration à l'autre présente l'avantage que l'assise de l'enfant (qui est, sur les figures, un hamac, mais qui peut être un support d'un autre type, comme une coque) garde une inclinaison sensiblement identique dans les configurations à deux roues et à trois roues. L'enfant est donc en permanence dans une position idéale.

### 6.4 principe de l'invention

Dans la configuration tirette représentée par la figure 2, le centre de gravité de la poussette se trouve sensiblement au-dessus des roues 21. En d'autres termes, l'invention repose sur une approche originale consistant à ramener l'axe des roues principales sensiblement dans le plan vertical passant par le centre de gravité de la poussette.

L'essentiel du poids de la poussette est donc supporté par les roues 21. L'utilisateur qui pousse ou qui tire cette poussette n'aura donc pas ou peu d'effort de portage à fournir. L'essentiel des efforts qu'il devra fournir sera donc horizontal, pour déplacer la poussette. Cette poussette engendre donc une fatigue réduite pour l'utilisateur qui la pousse ou la tire.

De plus, si l'utilisateur veut lâcher les poignées, il peut le faire très facilement. Deux modes de réalisation de l'invention permettent ainsi à l'utilisateur de lâcher les poignées de la poussettes. Préférentiellement, dans ces modes de réalisation, les moyens de contrôle du déplacement des roues principales agissent de façon à amener l'axe des roues au voisinage du plan verticale passant par le centre de gravité, sans dépasser ce plan.

Selon le mode de réalisation, la position des longerons de roue principale 2, en configuration tirette, n'est pas verrouillée. Ainsi, tant que l'utilisateur tire les poignées de la poussette, celle-ci reste en configuration tirette telle que représentée sur la figure 2. Si au contraire l'utilisateur lâche les poignées de la poussette, ou les pousse, les longerons de roue principale 2 basculent pour revenir en position classique à trois roues, si le support de roue secondaire 3 est en place, ou en appui stable sur la béquille, si celle-ci est en place.

Bien entendu le mode de réalisation décrit ci dessus peut être mis en oeuvre sur la poussette. Ainsi, la poussette représentée sur les figures 1 à 6 peut permettre ce mode d'utilisation.

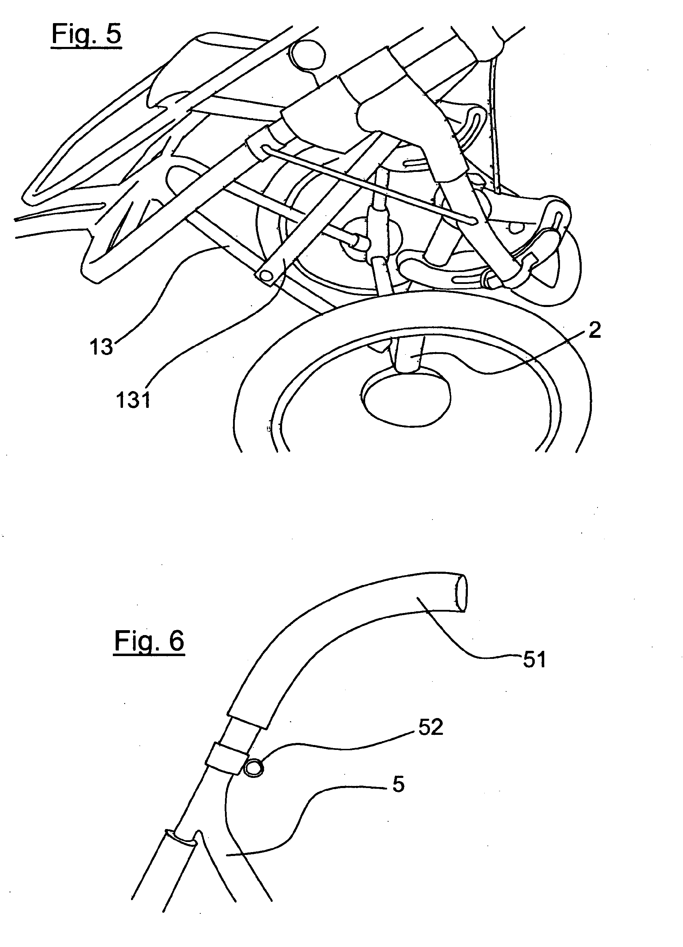

Comme le montre la figure 5, la béquille 13, quand elle est dans sa position de rangement, retenue par la sangle 131, empêche les longerons de roue 2 de terminer leur mouvement vers leur configuration tirette. En effet, ses extrémités se trouvent sur la trajectoire des longerons 2 quand ceux-ci pivotent, et elles forment une butée qui limite le mouvement des longerons de roues 2.

Les longerons de roue n'ayant pas terminé leur mouvement, leur position n'est pas verrouillées. La poussette peut cependant être utilisée en configuration tirette. Cependant, si l'utilisateur pousse les poignées ou s'il les lâche, les longerons de roue pivoteront pour revenir dans leur configuration classique, dans laquelle ils pourront se verrouiller. La poussette aura ainsi une plus grande stabilité, pour une plus grande sécurité de l'enfant.

Dans le mode de réalisation représenté par la figure 5, la fonction de butée est réalisée par la béquille 13. Il est à noter que dans d'autres modes de réalisation de l'invention, cette fonction peut être effectuée par d'autre pièces, et par exemple par l'élément de pivotement 6.

### 6.5 L'élément de pivotement

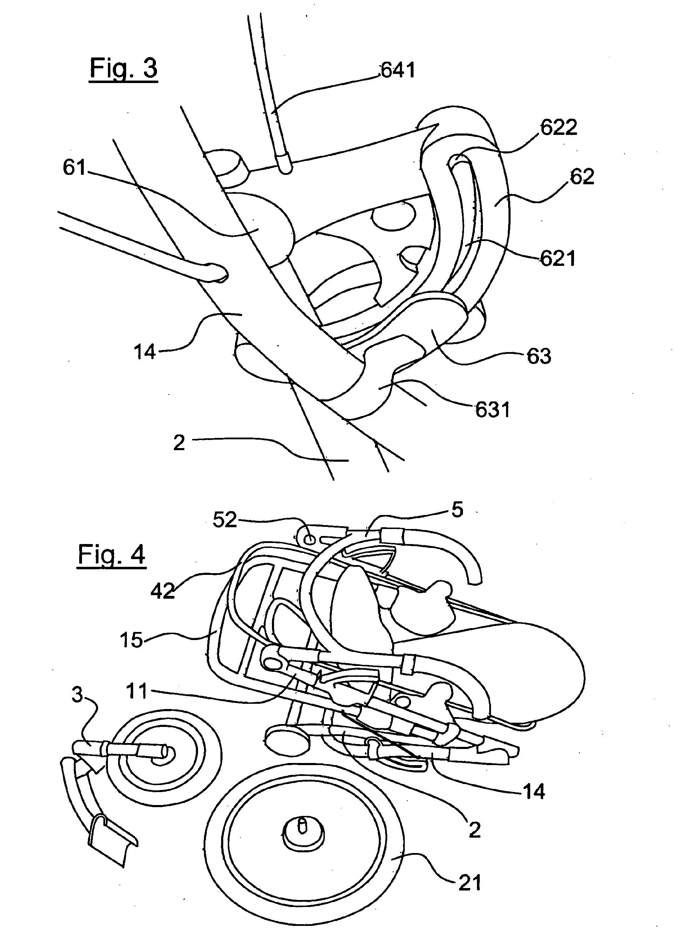

La figure 3 est une vue de détail de la poussette de la figure 1, dans sa configuration classique à trois roues, et représente un des éléments de pivotement 6, monté sur la partie fixe (par rapport à la partie mobile portant les roues principales) du châssis.

L'élément de pivotement 6 comprend une partie formant charnière 61 entre le support de roues principales 14 et le longeron de roue principale 2. Cet élément de pivotement 6 comprend également un rail de guidage 62, qui est solidarisé à l'extrémité supérieure du longeron de roue principale 2. Ce rail de guidage comprend une lumière de guidage 621 formant un arc de cercle, qui coopère avec un coulisseau 63 qui est solidarisé au support de roue principale 14 par une patte de fixation 631.

Le coulisseau peut coulisser dans la lumière 621 pour accompagner le pivotement du longeron 2 par rapport au support 14. Sur la figure 3, le coulisseau 63 est représenté à une extrémité de la lumière 621. Cette position, qui est généralement verrouillée, correspond à la configuration à classique à trois roues de la poussette. Dans la configuration tirette, par exemple à deux roues, de la poussette, le coulisseau 63 est généralement situé à l'autre extrémité de la lumière 621. Cette position n'est pas verrouillée.

L'élément de pivotement 6 permet donc de contrôler efficacement et solidement le déplacement angulaire du longeron 2. Il permet également, bien entendu, de verrouiller, de préférence automatiquement, la position du bras, quand cela est nécessaire. Le déverrouillage est contrôlé de préférence par une commande déportée 59, située par exemple sur au niveau des poignées 51 de la poussette, et reliée à l'élément de pivotement 6 par un câble passant dans une gaine 641.

L'élément de pivotement 6 permet également, selon une caractéristique avantageuse, d'assurer la suspension de la poussette de façon particulièrement facile. Des moyens d'amortissement 622, qui peuvent être constitué, par exemple, par un élément en caoutchouc ou par un ressort, sont placés aux deux extrémités de la lumière. Ils permettent un amortissement entre le longeron 2 et le support 14, et assurent ainsi la suspension de la poussette aussi bien dans sa configuration tirette que dans sa configuration classique à trois roues. Une solution équivalente peut consister à mettre ces moyens d'amortissement aux extrémités du coulisseau 63.

### 6.4 Pliage de la poussette

La figure 4 illustre la poussette de la figure 1 pliée. Pour que la poussette soit la plus compacte possible, le support de poignée 5 est replié sur les bras poussoirs 11, par rotation autour des articulations 52. Les bras poussoirs 11, le support de roue principale 14, et les longerons de roue principale 2, sont également repliés sur la partie basse 15 du cadre 1. Les roues principales 21 sont démontées, ainsi que le support de roue avant 3 amovible. La commande du déverrouillage des éléments de la poussette pour leur pliage se trouve au niveau des poignée de pliage 64, sur les bras poussoirs 11.

### 6.5 Autres caractéristiques et avantages

De façon avantageuse, les poignées 51 de la poussette peuvent être rotatives par rapport au support de poignées 5, pour offrir un plus grand confort à l'utilisateur tant dans la configuration classique que dans la configuration tirette. Des commandes 59 peuvent être prévus au niveau des poignées pour permettre d'actionner facilement, par exemple, le verrouillage ou le déverrouillage du pivotement du longeron 2 ou du pivotement de poignées, ou les freins, ou le pliage de la poussette...

Sur la poussette de la figure 2, le support de poignées 5 a effectué un pivotement par rapport aux bras poussoirs 11 du cadre 1, autour des articulations 52. Ce pivotement permet de régler la hauteur des poignées 51 et de l'adapter d'une part à la taille de l'utilisateur qui pousse ou tire la poussette, et d'autre part à la configuration de la poussette. Bien entendu, les articulations 52 permettent également de verrouiller la position du support de poignées 5.

## Revendications

1. Poussette pour enfant comprenant un châssis (1) équipé d'un guidon ou de poignées (51), et supportant une assise (4) et au moins trois roues, dont deux roues principales coaxiales (21),
l'axe desdites roues principales pouvant se déplacer par rapport audit châssis de façon à prendre au moins deux positions d'utilisation, parmi lesquelles :
- une première position d'utilisation, dans laquelle ledit axe de rotation des roues principales se trouve sensiblement dans un plan de référence vertical et passant par le centre de gravité de ladite poussette ;
- une deuxième position d'utilisation, dans laquelle ledit axe de rotation de roues principales est éloigné dudit plan de référence,
**caractérisée en ce que**, dans ladite première position d'utilisation, la position desdites roues principales par rapport au châssis n'est pas verrouillée, et **en ce que** ladite poussette tend à revenir dans ladite deuxième position si ledit guidon ou lesdites poignées ne sont pas maintenus par l'utilisateur.

2. Poussette selon la revendication 1, **caractérisée en ce que** le passage de ladite première position d'utilisation à ladite seconde position d'utilisation se fait par rotation de deux longerons portant chacun une desdites roues principales, par rapport à un élément fixe dudit châssis.

3. Poussette selon l'une quelconque des revendications 1 et 2, **caractérisée en ce que** dans ladite seconde position d'utilisation, au moins une roue secondaire est fixée au châssis, ledit plan de référence étant situé entre l'axe de rotation desdites roues principales et l'axe de rotation de la ou desdites roues secondaires.

4. Poussette selon la revendication 3, **caractérisée en ce que** la ou lesdites roues secondaires sont amovibles et/ou mobiles par rapport audit châssis.

5. Poussette selon l'une quelconque des revendications 1 à 4, **caractérisée en ce que**, dans ladite première position d'utilisation, une béquille forme point d'appui permettant de maintenir ladite poussette en équilibre.

6. Poussette selon la revendication 5, **caractérisée en ce que** ladite béquille est repliable.

7. Poussette selon l'une quelconque des revendications 1 à 6, **caractérisée en ce qu'**une commande située à proximité d'un guidon ou de poignées de ladite poussette permet de freiner lesdites roues principales.

8. Poussette selon l'une quelconque des revendications 2 à 7, **caractérisée en ce qu'**une commande située à proximité d'un guidon ou de poignées de ladite poussette permet de déverrouiller la position dudit longeron quand la poussette est dans ladite seconde position.

9. Poussette selon l'une quelconque des revendications 1 à 8, **caractérisée en ce que** ledit châssis porte deux éléments de guidage contrôlant respectivement la position de chacun desdits axes de rotation desdites roues principales.

10. Poussette selon la revendication 9, **caractérisée en ce que** chacun desdits éléments de guidage portent une lumière dans laquelle circule un doigt solidaire d'un support de l'axe de rotation de l'une desdites roues principales.

11. Poussette selon la revendication 10, **caractérisée en ce que** ladite lumière définit un arc de cercle.

12. Poussette selon l'une quelconque des revendications 9 à 11, **caractérisée en ce que** lesdits éléments de guidage portent des moyens de suspension.

13. Poussette selon les revendications 12 et 10, **caractérisée en ce que** lesdits moyens de suspension comprennent au moins un élément souple monté à au moins une des extrémités de ladite lumière et/ou sur ledit doigt.

14. Poussette selon l'une quelconque des revendications 1 à 13, **caractérisée en ce** ledit guidon ou lesdites poignées peuvent être orientés selon au moins deux configurations pour s'adapter à la position d'utilisation de la poussette.

15. Poussette selon l'une quelconque des revendications 1 à 14, **caractérisée en ce que** l'orientation de ladite assise reste sensiblement constante lors du passage entre ladite première position à ladite seconde position.

## Claims

1. Children's stroller comprising a frame (1) fitted with a handlebar or handles (51) and supporting a seat (4) and at least three wheels of which the principal two wheels are coaxial (21),
the axis of said principal wheels being capable of moving relative to said frame so as to assume at least two usage positions, including:
- a first usage position wherein said axis of rotation of the principal wheels lies substantially in a vertical reference plane passing through the centre of gravity of said stroller;
- a second usage position wherein said axis of rotation of the principal wheels is some distance away from said reference plane,
**characterised in that**, in said first usage position, the position of said principal wheels relative to the frame is not locked, and **in that** said stroller tends to revert to said second position if said handlebar or said handles are not held by the user.

2. Stroller according to Claim 1, **characterised in that** the passage from said first usage position to said second usage position is obtained by the rotation of two struts each bearing one of said principal wheels, relative to a fixed element of said frame.

3. Stroller according to either of Claims 1 and 2, **characterised in that** in said second usage position, at least one secondary wheel is fixed to the frame, said reference plane being situated between the axis of rotation of said principal wheels and the axis of rotation of said secondary wheel or wheels.

4. Stroller according to Claim 3, **characterised in that** said secondary wheel or wheels are detachable and/or mobile relative to said frame.

5. Stroller according to any one of Claims 1 to 4, **characterised in that,** in said first usage position, a stay forms a support point enabling said stroller to be maintained in balance.

6. Stroller according to Claim 5, **characterised in that** said stay is foldable.

7. Stroller according to any one of Claims 1 to 6, **characterised in that** a control device located in proximity to a handlebar or handles of said stroller facilitates braking of said principal wheels.

8. Stroller according to any one of Claims 2 to 7, **characterised in that** a control device located in proximity to a handlebar or handles of said stroller enables the position of said strut to be unlocked when the stroller is in said second position.

9. Stroller according to any one of Claims 1 to 8, **characterised in that** said frame bears two guide members respectively controlling the position of each of said axes of rotation of said principal wheels.

10. Stroller according to Claim 9, **characterised in that** each of said guide members incorporates an aperture wherein travels a finger integral with a support of the axis of rotation of one of said principal wheels.

11. Stroller according to Claim 10, **characterised in that** said aperture defines an arc of circle.

12. Stroller according to any one of Claims 9 to 11, **characterised in that** said guide members bear suspension means.

13. Stroller according to Claims 12 and 10, **characterised in that** said suspension means include at least one flexible element mounted at at least one of the extremities of said aperture and/or on said finger.

14. Stroller according to any one of Claims 1 to 13, **characterised in that** said handlebar or said handles can be oriented in at least two configurations to adapt to the usage position of the stroller.

15. Stroller according to any one of Claims 1 to 14, **characterised in that** the orientation of said seat remains substantially constant when passing between said first position and said second position.

## Patentansprüche

1. Kinderwagen, der einen Rahmen (1) aufweist, welcher mit einem Lenker oder mit Handgriffen (51) ausgestattet ist und ein Grundteil (4) und mindestens drei Räder, davon zwei koaxiale Haupträder (21) trägt,
wobei die Achse dieser Haupträder sich gegenüber dem besagten Rahmen so bewegen kann, dass sie mindestens zwei Verwendungspositionen einnehmen kann, darunter:
- eine erste Verwendungsposition, bei welcher die besagte Rotationsachse der Haupträder sich in etwa in einer senkrechten Referenzebene befindet, welche durch den Schwerpunkt des besagten Kinderwagens geht;
- eine zweite Verwendungsposition, bei der die besagte Rotationsachse der Haupträder von der besagten Referenzebene entfernt liegt,
**dadurch gekennzeichnet, dass** in der besagten ersten Verwendungsposition, die Position der besagten Haupträder im Verhältnis zum Rahmen nicht verriegelt ist und, dass der besagte Kinderwagen bestrebt ist, in die besagte zweite Position zurückzukehren, wenn der besagte Lenker oder die besagten Handgriffe vom Benutzer losgelassen werden.

2. Kinderwagen nach Anspruch 1, **dadurch gekennzeichnet, dass** der Übergang von der besagten ersten Verwendungsposition in die besagte zweite Verwendungsposition durch Drehen zweier Längsträger gegenüber einem feststehenden Element des besagten Rahmens erfolgt, wobei diese Längsträger jeweils eines der besagten Haupträder tragen.

3. Kinderwagen nach einem der Ansprüche 1 oder 2, **dadurch gekennzeichnet, dass** in der besagten zweiten Verwendungsposition mindestens ein sekundäres Rad an dem Rahmen befestigt ist, wobei die besagte Referenzebene zwischen der Rotationsachse der besagten Haupträder und der Rotationsachse des besagten Sekundärrades bzw. der besagten Sekundärräder liegt.

4. Kinderwagen nach Anspruch 3, **dadurch gekennzeichnet, dass** das besagte Sekundärrad bzw. die besagten Sekundärräder abnehmbar und/oder gegenüber dem besagten Rahmen beweglich sind.

5. Kinderwagen nach einem der Ansprüche 1 bis 4, **dadurch gekennzeichnet, dass** in der ersten besagten Verwendungsposition eine Gabelstange einen Stützpunkt bildet, der es ermöglicht, den besagten Kinderwagen im Gleichgewicht zu halten.

6. Kinderwagen nach Anspruch 5, **dadurch gekennzeichnet, dass** die besagte Gabelstange sich zurückfalten lässt.

7. Kinderwagen nach einem der Ansprüche 1 bis 6, **dadurch gekennzeichnet, dass** ein in der Nähe eines Lenkers oder der Handgriffe des besagten Kinderwagens befindliches Bedienungsteil das Bremsen der besagten Haupträder ermöglicht.

8. Kinderwagen nach einem der Ansprüche 2 bis 7, **dadurch gekennzeichnet, dass** ein in der Nähe eines Lenkers oder der Handgriffe des besagten Kinderwagens befindliches Bedienungsteil das Entriegeln der Position des besagten Querträgers ermöglicht, wenn sich der Kinderwagen in der besagten zweiten Position befindet.

9. Kinderwagen nach einem der Ansprüche 1 bis 8, **dadurch gekennzeichnet, dass** der besagte Rahmen zwei Lenkelemente trägt, die jeweils die Position einer jeden der besagten Rotationsachsen der besagten Haupträder steuert.

10. Kinderwagen nach Anspruch 9, **dadurch gekennzeichnet, dass** jedes der besagten Lenkelemente einen Schlitz aufweist, in dem ein mit einer Stütze der Rotationsachse einer der besagten Haupträder verbundener Zapfen läuft.

11. Kinderwagen nach Anspruch 10, **dadurch gekennzeichnet, dass** der besagte Schlitz einen Kreis bildet.

12. Kinderwagen nach einem der Ansprüche 9 bis 11, **dadurch gekennzeichnet, dass** die besagten Lenkelemente Federungsmittel tragen.

13. Kinderwagen nach den Ansprüchen 12 und 10, **dadurch gekennzeichnet, dass** die besagten Federungsmittel mindestens ein biegsames Element aufweisen, das an mindestens einem Ende des besagten Schlitzes und/oder am besagten Zapfen angebracht ist.

14. Kinderwagen nach einem der Ansprüche 1 bis 13, **dadurch gekennzeichnet, dass** der besagte Lenker oder die besagten Handgriffe sich nach mindestens zwei Konfigurationen orientieren lassen, um sich der Verwendungsposition des Kinderwagens anzupassen.

15. Kinderwagen nach einem der Ansprüche 1 bis 14, **dadurch gekennzeichnet, dass** die Orientierung des besagten Grundteils beim Übergang von der besagten ersten in die besagte zweite Position in etwa konstant bleibt.
